# EUROPÄISCHE PATENTSCHRIFT

(11) **EP 0 616 656 B1**
(45) Veröffentlichungstag und Bekanntmachung des Hinweises auf die Patenterteilung: **15.07.1998**
(21) Anmeldenummer: 92924846.6
(22) Anmeldetag: 01.12.1992
(51) Int. Cl.: E02D 31/00, A62D 3/00, B09B 3/00

(54) **VERFAHREN ZUR LOKALEN BODENBEHANDLUNG INSBESONDERE PRÜFUNG UND REINIGUNG EINES VERSCHMUTZTEN BODENS**
PROCESSES FOR LOCAL GROUND TREATMENT, ESPECIALLY TESTING AND CLEANING POLLUTED GROUND
PROCEDE POUR UN TRAITEMENT DE SOL LOCALISE, EN PARTICULIER POUR L'ANALYSE ET LE NETTOYAGE D'UN SOL POLLUE

(30) Priorität: 02.12.1991 HU 376791
(43) Veröffentlichungstag der Anmeldung: 28.09.1994
(73) Patentinhaber: FÖLDTANI KUTATO ES FURO KFT., H-8101 Varpalota (HU)
(72) Erfinder: BIRO, Emöke, H-8000 Székesfehérvár (HU); SZEKVÖLGYI, Zoltán, H-8200 Veszprém (HU); HORVATH, Ott, H-8100 Várpalota (HU); GABRIS, Tibor, H-8100 Várpalota (HU)
(74) Vertreter: Prechtel, Jörg, Dipl.-Phys. Dr.
(86) Internationale Anmeldenummer: HU9200051
(87) Internationale Veröffentlichungsnummer: WO9311307

(56) Entgegenhaltungen:
- EP-A- 0 170 862
- EP-A- 0 228 626
- DE-A- 3 838 850
- DE-A- 4 008 270

## Beschreibung

Die Erfindung betrifft ein Verfahren zur lokalen Behandlung von Böden, insbesondere zur Prüfung und Reinigung von verunreinigten Böden, unter Verwendung eines Rohre aufweisenden, die Oberfläche mit einer zu behandelnden Bodenschicht verbindenden Fördersystems zum Zuführen von Behandlungsmittel, insbesondere Reinigungsmittel, zur Bodenschicht und zum Zurückführen von Behandlungsmittel und/ oder zu entfernende Verunreinigungen mit sich führender Flüssigkeiten von der Bodenschicht zur Oberfläche.

Das erfindungsgemäße Verfahren wird insbesondere für mit Chemikalien oder Erdölderivaten verschmutzte Böden eingesetzt, bei denen die Tiefe der Verunreinigung auf mehrere Meter geschätzt wird. Mit derartigen Verunreinigungen kann man in der Umgebung von industriellen Betrieben, Treibstoffbasen, Ölraffinerien, militärischen Objekten rechnen. Auch anderswo können Bodenverunreinigungen vorkommen, so z. B. entlang der Verkehrslinien, z. B. nach Unfällen. Die Gefährlichkeit der geschilderten Bodenverunreinigungen ist bedeutend. Dabei ist zu berücksichtigen, daß Verunreinigung des Bodens mittelbar oder unmittelbar in der Nahrungsmittelkette erscheint. Es ist daher äußerst wichtig, daß die Bodenverunreinigungen mit den wirksamsten Methoden bekämpft werden und ihre schädlichen Einflüsse wenigstens verringert werden.

Die lokale Behandlung des Bodens kann mit oder ohne Reinigung vorgenommen werden. Im Sinne der Erfindung gehören alle Tätigkeiten zum Begriff "Behandlung", die den Boden mechanisch oder chemisch beeinflussen oder ändern.

In Hinblick darauf, daß das erfindungsgemäße Verfahren hauptsächlich zur Bodenreinigung verwendet wird, wurde dieses im nachfolgenden hauptsächlich in Verbindung mit der Reinigung beschrieben. Die Anwendungsmöglichkeiten sind jedoch keinesfalls auf die Reinigung begrenzt.

Bei der Reinigung von verunreinigten Böden können generell zwei Methoden unterschieden werden, nämlich der Austausch des Bodens und die an Ort und Stelle vorgenommene Reinigung. Die Erfindung befaßt sich mit letzterer.

Es ist bekannt, daß zweierlei Arten von Bodenverunreinigungen unterschieden werden können, und zwar mit Öl verunreinigte Böden und Böden mit chemischer Verunreinigung. Hier unterscheidet man zwischen in gebundener Form, in gelöster Form und in freier Form vorliegenden Verunreinigungen. Bei in gebundener Form erscheinenden Verunreinigungen scheint die biologische Reinigung die zweckmäßigste zu sein. Wenn die Bodenverunreinigung in gelöster Form vorhanden ist, scheint die chemische Methode die erfolgreichste zu sein. Falls die Verunreinigung in freier Form vorhanden ist, wenden wir zweckdienlich physikalische Reinigungsmethoden an.

Bei bekannten Verfahren zur lokalen Reinigung verfährt man so, daß man vertikale Bohrungen in die verunreinigte Schicht bohrt und durch diese, in Abhängigkeit von der Natur der Verunreinigung, chemische Wirkung ausübende Reinigungsmittel, Bakterienstämme oder Luft in die verunreinigte Schicht einführt. Die Wirksamkeit der Methode kann durch die Änderung der Abstände zwischen den einzelnen Bohrungen geändert werden, oder die Permeabilität der verschmutzten Schicht wird durch Explosion erhöht. Jedoch ist die erreichbare Wirkungszunahme beschränkt.

Ein charakterisierendes Beispiel ist in der Zeitschrift "Wasser Luft Boden" (Nummer 11-12, Jahr 1990, Seiten 94-95) aufzufinden. Das hier geschilderte Beispiel bezieht sich auf eine Methode der in-situ-Sanierung von mit flüchtigen chlorierten Kohlenwasserstoffen verunreinigten Böden, im Laufe derer die Bodenluft durch vertikale Bohrungen abgezogen wird. (Der guten Ordnung halber soll bemerkt werden, daß entsprechend dem Wesen der Erfindung unter Flüssigkeit - im weiteren Sinne genommen - alle Fluide, so auch Gas verstanden werden sollen). Ein weiteres Beispiel wird an Seiten 90-91 der vorher erwähnten Nummer der Zeitschrift "Wasser Luft Boden" geschildert. Die dort geschilderte Lösung betrifft das Auswaschen des Bodens mit Hochdruck.

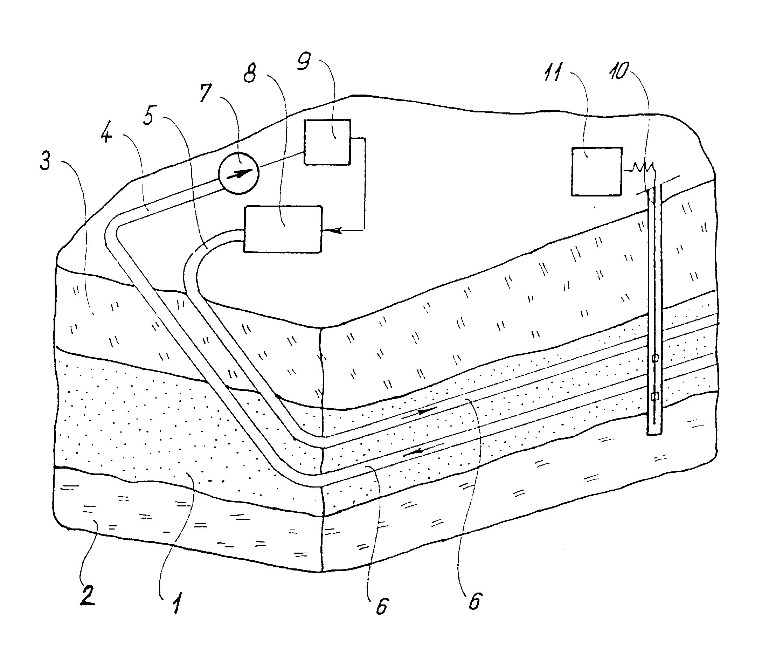

Ein Verfahren der eingangs genannten Art ist bekannt (DE-A-40 08 270). Das hierzu eingesetzte Fördersystem umfaßt vertikal verlaufende perforierte Zuführ-Rohre (Injektionsbrunnen) für Wasser und Luft. Über ebenfalls vertikal verlaufende perforierte Zurückführ-Rohre (Saugbrunnen) wird das Wasser und die Luft nach Durchgang durch einen Teil der zu reinigenden Bodenschicht wieder zurückgeführt. Die voneinander beabstandeten Zuführ- und Zurückführ-Rohre können dem Raster entsprechend Fig. 3 angeordnet sein mit Verbindung lediglich der oberflächenseitigen Rohrenden über ein an der Oberfläche verlaufendes Rohrsystem.

Die bekannten Lösungen weisen zahlreiche Nachteile auf. Einer der Nachteile zeigt sich darin, daß nur eine einzige Art der Bodenreinigung realisiert werden kann. Es besteht nicht die Möglichkeit, biologische, physikalische und chemische Methoden gleichzeitig an einer vorgegebenen Stelle, jedoch in verschiedener Tiefe, anzuwenden.

Ein weiterer Nachteil der bekannten Lösungen besteht darin, daß diese wegen der vertikalen Bohrungen nicht an sämtlichen Stellen verwendbar sind. So z. B. ist es offensichtlich unmöglich, anhand vertikaler Bohrungen in Bodenschichten einzudringen, die unter Bauobjekten liegen oder in Flußbetten oder in Bergabhängen vorhanden sind. Auch beschränkt sich dieser Stand der Technik auf Behandlungsmethoden, bei denen das im Kreislauf geführte Behandlungsmittel streckenweise durch die zu behandelnde Schicht strömen kann. Behandlungsmethoden, bei denen dies ausgeschlossen ist, wie z. B. die Gefrier-Behandlung von Boden mit Hilfe von zirkulierendem flüssigen Stickstoff, sind somit von vornherein ausgeschlossen.

Der Erfindung liegt die Aufgabe zugrunde, ein Verfahren zur Behandlung von Böden, insbesondere zur Prüfung und Reinigung von verunreinigten Böden, anzugeben, welches auch an schlecht zugänglichen Bodenschichten anwendbar ist und eine Vielzahl von Behandlungsmethoden zuläßt.

Diese Aufgabe wird durch die kennzeichnenden Merkmale des Anspruchs 1 in Verbindung mit den Merkmalen des Oberbegriffs gelöst. Das unterirdische Rohrsystem ist an die Lage der zu behandelnden Schicht angepaßt, wobei sich zumeist horizontaler Verlaut ergibt. Es können ein oder mehrere Strömungskreise vorgesehen werden, so daß sich intensiver Kontakt der zu behandelnden Bodenschicht mit dem jeweiligen Behandlungsmedium ergibt. Aufgrund der Neigung der Zuführ- und Zurückführ-Anschlußrohre wird ein 90°-Knick beim Anschluß an das unterirdische Rohrsystem vermieden, was nicht nur das problemlose Einführen und Herausziehen von Sonden in bzw. aus dem Rohrsystem ermöglicht wird, sondern auch das unterirdische Verlegen des Rohrsystems selbst wesentlich erleichtert.

Die EP-A-0 228 626 befaßt sich mit einem Verfahren zur Bodenkontaminierung mit Hilfe von Mikroorganismen. Hierbei wird eine die schadstoffspezifischen Mikroorganismen enthaltende wässrige Suspension in den Boden eingebracht und zwar durch übliche Bodenbearbeitungsgeräte, z. B. Pflug, Tiefenlockerungsgerät oder Bagger. Auch kann die Nährschicht zur Benetzung der Mikroorganismen mit einem wässrigen Flüssigkeitsstrom berieselt werden. Ferner wird die Möglichkeit angesprochen, die im Boden versickernde Flüssigkeit abzupumpen und zwar mit Hilfe von in den Boden eingebrachten Drainagerohren. Die Flüssigkeit kann dann nach Anreicherung mit Sauerstoff erneut versprüht werden. Der so gebildete Flüssigkeitskreislauf verläuft dementsprechend streckenweise durch das Erdreich. Ein Hinweis auf die erfindungsgemäße Lösung, nämlich ein unterirdisches Rohrsystem zu verwenden, welches über die Zuführ- und Zurückführ-Anschlußrohre sowohl dem Zuführen wie auch dem Abführen der Behandlungsflüssigkeit dient, ist diesem Stand der Technik nicht zu entnehmen.

Auch der Stand der Technik gemäß EP-A-0 170 862 befaßt sich lediglich mit einem Behandlungsverfahren mit voneinander beabstandeten, vertikal verlaufenden Zuführ-Rohren (Schluckbrunnen 6, 7) und Zurückführ-Rohren (Kontrollbrunnen 9) . Ein an die Lage der zu behandelnden Bodenschicht angepaßtes, insbesondere horizontales, perforiertes unterirdisches Rohrsystem zum Zuführen und Abführen von Behandlungsflüssigkeit ist dieser Druckschrift nicht zu entnehmen.

Die DE-A-38 38 850 schließlich befaßt sich nicht mit einem Verfahren zur lokalen Behandlung von (gewachsenen) Böden, sondern zur Behandlung von Mülldeponien, Klärschlämmen und Filterstäuben. Ein Rohrleitungsnetz an der Oberfläche der zu behandelnden Deponie dient der Berieselung der Deponie sowie der Entgasung. Unter der Deponie befindet sich ein ähnliches Rohrleitungsnetz zum Absaugen von Sickerwässern und zum Zuführen von Frischluft. Die Problematik bei der Behandlung von Mülldeponien unterscheidet sich grundsätzlich von der bei der lokalen Behandlung von Böden. Die erforderlichen Rohrleitungsnetze lassen sich wesentlich einfacher verlegen, ggf. teilweise bereits beim Anlegen der Mülldeponie. Lokal begrenzte und unter Umständen sehr schwer zugängliche unterirdische Bodenschichten treten hier nicht auf.

Hiervon abgesehen gibt der aufgeführte Stand der Technik auch kein Hinweis auf das erfindungsgemäße unterirdische Rohrsystem zum Zuführen wie auch Zurückführen von Behandlungsmittel. Überdies zeigt keine einzige der zitierten Druckschriften den Einsatz von schräg verlaufenden Zuführ- und Zurückführ-Anschlußrohren, die das nachträgliche Verlegen des unterirdischen Rohrsystems auch in von oben her praktisch unzugängliche Bodenschichten wesentlich erleichtern.

Das perforierte Rohrsystem gemäß der Erfindung wird der dominierenden Richtung der zu reinigenden Bodenschicht entsprechend positioniert. Es dient der Ansammlung und Weiterförderung der verunreinigten Flüssigkeit, des verschmutzten Bodenwassers bzw. der Einführung der verschiedenen Behandlungs- und Reinigungsmittel in die vorbestimmte Bodenschicht. Der Begriff "dominierende Richtung" bezieht sich auf die räumliche Lage des überwiegenden Teils der betreffenden Schicht. Wenn der überwiegende Teil der Masse horizontal liegt, obzwar einige Strecken absteigend sein können, verläuft die dominierende Richtung horizontal. Im Sinne des erfindungsgemäßen Verfahrens ist dann das oben erwähnte Rohrsystem horizontal.

Das Rohrsystem ist mit schrägen Anschlußrohren und über diese mit an der Oberfläche liegenden Einrichtungen (z. B. Pumpe) verbunden. Form und Anordnung der Perforation können wo immer in Abhängigkeit von den örtlichen Verhältnissen geändert bzw. gewählt werden. Bezüglich der Strömungstechnik kann das Rohrsystem aus mehreren Strömungskreisen bestehen; in diesen können gleichzeitig verschiedene Prozesse stattfinden. So können z. B. in dem einen Strömungskreis Sammlung des verunreinigten Bodenwassers und Förderung zur Oberfläche erfolgen; in dem anderen Strömungskreis wird das Reinigungsmittel in die verunreinigte Schicht eingeführt. Nach den bisherigen Erfahrungen kann das Rohrsystem bis zu einer Tiefe von 10 m problemlos eingebaut werden.

Für das Rohrsystem und die sich anschließenden Rohre können an sich bekannte Kunststoffrohre Verwendung finden. Der Durchmesser liegt im Bereich bis 200 mm.

Im Sinne der Erfindung wird die Verunreinigung der zu behandelnden und/oder verschmutzten Schicht direkt oder indirekt geprüft. Die direkte Prüfung besteht darin, daß ein Beobachtungsbrunnen in vertikaler Richtung, von dem Rohrsystem unabhängig, ausgebaut wird und die von in dem Brunnen eingebauten Fühlern abgegebenen Signale an der Oberfläche verarbeitet werden. Die in der geprüften Schicht herrschenden Zustände können durch Laboranalyse erfaßt werden. Die indirekte Prüfung besteht darin, daß das in dem Rohrsystem gesammelte und an die Oberfläche geförderte, verunreinigte Bodenwasser analysiert wird; aus dem Ergebnis der Analyse kann die Verunreinigung des Bodens bestimmt werden. Es gibt eine weitere Methode zur Prüfung der Bodenverunreinigung, wonach ein Carottagenkabel in das Rohrsystem oder in einen Teil davon eingebaut wird und mit Hilfe des Bohrloch-Untersuchungskabels bzw. mit der an das Kabel angeschlossenen Meßeinheit eine lochgeophysikalische Messung in horizontaler Richtung durchgeführt wird.

Im Sinne der Erfindung kann in das schräge und horizontale Rohrsystem nicht nur eine Carottagesonde, sondern jedwede Sonde oder ein anderes Gerät eingebaut werden. Mit Hilfe dieser Einheiten kann die Änderung bzw. die Beständigkeit der physikalischen, chemischen und biologischen Zustände kontinuierlich oder diskontinuierlich in der geprüften Schicht registriert werden.

Über das schräge und horizontale Rohrsystem können Kernproben entnommen werden. Durch Laboranalysen derselben können weitere, genauere Informationen erhalten werden; das bedeutet, daß nicht ausschließlich aus den vertikalen Bohrungen Kernproben entnommen werden können.

Es besteht die Möglichkeit, das auf die Oberfläche geförderte Bodenwasser zu klären und ggf. das Abwasser auf eine vom ökologischen Standpunkt aus befriedigende Weise zu lagern. Im allgemeinen ist es zweckmäßig, das geklärte Bodenwasser in die vorher als verunreinigt betrachtete Schicht zurückzuleiten.

Nach erfolgter Reinigung der verunreinigten Schicht kann das eingebaute Rohrsystem in der Weise verwertet werden, daß es als ein Beobachtungssystem ausgestaltet wird.

Die wesentliche Charakteristik des erfindungsgemäßen Verfahrens besteht darin, daß schräge Anschlußrohre und ein damit verbundenes Rohrsystem derart ausgestaltet werden, daß deren Stellung sich der dominierenden Position der zu behandelnden bzw. verunreinigten Schicht anpaßt, z. B. eine horizontale Stellung einnimmt. Das Rohrsystem ist perforiert. Entweder bildet es eine Einheit oder es ist aus Strömungskreisen zusammengesetzt. In dem Rohrsystem oder in einem dem Strömungskreis zugeordneten Teil werden die verunreinigte Flüssigkeit oder das verschmutzte Bodenwasser abgefördert, während durch den anderen Teil des Strömungskreises Behandlungs- und/oder Reinigungsmittel oder reines Wasser eingegeben werden.

Bei einer zweckmäßigen Ausführungsform des erfindungsgemäßen Verfahrens wird das auf die Oberfläche geförderte verunreinigte Bodenwasser kontinuierlich oder diskontinuierlich analysiert.

Es ist vorteilhaft, wenn die zu behandelnde bzw. verschmutzte Schicht mit Hilfe eines von dem Rohrsystem unabhängigen Brunnens überprüft wird.

Gemäß einer weiteren Ausführungsform der Erfindung wird die Lösung der zu behandelnden bzw. verunreinigten Schicht mit Hilfe eines wenigstens in einem Teil des Rohrsystems eingebauten mit einer an der Oberfläche vorhandenen Meßeinheit angeschlossenen Carottagenkabels oder eines Fühlorgans und/oder eines Meßelements geprüft.

Eine weitere Version des erfindungsgemäßen Verfahrens besteht darin, daß das auf die Oberfläche geförderte Bodenwasser gereinigt und das gereinigte Bodenwasser in die verunreinigte Schicht zurückgeleitet wird.

Im Laufe des erfindungsgemäßen Verfahrens können als Reinigungsmittel dienende Bakterienkulturen und/oder Chemikalien eingesetzt werden.

Die Erfindung wird nachfolgend anhand eines Ausführungsbeispiels unter Bezugnahme auf die beiliegende Zeichnung beschrieben.

Die Zeichnung stellt die zur Realisierung des erfindungsgemäßen Verfahrens erforderlichen Ausrüstungen dar, wobei ein ausgebrochenes Detail des Bodens veranschaulicht wird. In dem hier beispielsweise angegebenen Fall befindet sich die verunreinigte Schicht 1 unter der oberen Deckschicht 3 des Bodens. Darunter liegt die wasserundurchlässige Schicht 2. Die verunreinigte Schicht 1 ist eine permeable Schicht. Zwecks Beseitigung der Verunreinigung wird unter Anwendung an sich bekannter Methoden (Bohrung, Verlegung von Rohren) das Rohrsystem 6 ausgestaltet. Entsprechend dem dargestellten Beispiel ist die dominierende Lage der zu reinigenden Schicht 1 horizontal. Dementsprechend nimmt das der Reinigung dienende Rohrsystem 6 eine horizontale Stellung ein. In der Figur wurde der komplette Ausbau des Rohrsystems nicht dargestellt, aber es soll bemerkt werden, daß dieses aus mehreren Strömungskreisen zusammengesetzt werden kann; die einzelnen Strömungskreise können zusammenhängend sein, aber sie können auch unabhängige Strömungskreise bilden.

An das hier geschilderte Rohrsystem 6 schließt sich über ein Anschlußrohr 4 eine Pumpe 7 und über ein Anschlußrohr 5 ein Behälter 8 an. Das auf die Oberfläche geförderte verunreinigte Bodenwasser wird in einen Reaktor 9 unter Druck geleitet; das hier gereinigte Bodenwasser gelangt in den Behälter 8, von dem das Wasser über das Anschlußrohr 5 in das Rohrsystem 6 zurückfließt.

Bei dem hier dargestellten Ausführungsbeispiel ist ein von dem Rohrsystem 6 unabhängiger Beobachtungsbrunnen 10 ausgebaut, in den eine an sich bekannte Sonde oder ein Carottagenkabel (Bohrlochkabel) oder sonstiges Fühlersystem eingebaut ist. Die vom System abgegebenen Signale werden mit Hilfe des Auswertungssystems 11 ausgewertet. Als Ergebnis der diskontinuierlichen bzw. kontinuierlichen Prüfungen stehen weitere Informationen über den Verlauf der Reinigung der verunreinigten Schicht 1 zur Verfügung.

Kontrolle bzw. Prüfung können auch in der Weise stattfinden, daß in das Rohrsystem 6 selbst oder in einen Abschnitt desselben ein Bohrlochkabel eingebaut wird, dessen Signale an der Oberfläche mit wohlbekannten Mitteln verarbeitet werden können. Auf diese Weise kann den Änderungen in der Verunreinigung gefolgt werden.

In ähnlicher Weise kann man neben dem dargestellten Rohrsystem ein weiteres Rohrsystem ausbauen, durch welches Reinigungsmittel, wie z. B. Bakterienkultur oder Chemikalien, in die verunreinigte Schicht 1 eingegeben werden.

Das hier geschilderte Rohrsystem kann auch periodisch eingesetzt werden, einmal für die Eingabe der Bakterienkultur und der chemischen Reinigungsmittel, ein andermal für die Weiterleitung des verunreinigten Bodenwassers bzw. des gereinigten Bodenwassers.

Falls Lage und Charakter der Verunreinigung von der Art sind, daß die verunreinigte Flüssigkeit in flüssigem Zustand einen vorbestimmten Raum ausfüllt, so kann man mit Hilfe des in dem betreffenden Raum angeordneten Rohrsystems 6 die flüssige Verunreinigung an die Oberfläche fördern. Aufgrund des beschriebenen Beispiels ist es klar, daß im Laufe der Anwendung des erfindungsgemäßen Verfahrens, in Kenntnis der in-situ-Zustände, die wirksamste Methode gewählt werden kann; es besteht die Möglichkeit, die günstigste chemische und biologische Zusammensetzung und Konzentration einzustellen. Im Zusammenhang mit dem horizontal angeordneten Rohrsystem bietet die realisierbare Lochgeophysik ein genaues Bild zur Bestimmung der Ansaat und Feststellung der in der Nähe der Oberfläche liegenden Schichtgrenzen.

Es soll betont werden, daß erfindungsgemäß physikalische, chemische und biologische Bodenreinigungsmethoden auch separat angewendet werden können, aber eine gleichzeitige Kombination ist auch möglich. Die Erfindung im Auge behaltend wird in Abhängigkeit von der geologischen Situation und dem Charakter der Verunreinigung die zweckmäßigste Methode ausgewählt.

Aufgrund der vorgenommenen Experimente konnte festgestellt werden, daß die Wirksamkeit der Bodenreinigung - im Vergleich mit den bisherigen Lösungen - um eine Größenordnung erhöht ist.

Auch die spezifischen Kosten sind bedeutend niedriger; sie machen nicht selten ein Fünftel bis ein Zehntel der Kosten des bisher bekannten Verfahrens aus.

Unter Anwendung des erfindungsgemäßen Rohrsystems können zahlreiche Aufgaben in Hinblick auf eine unter der Oberfläche liegende Bodenschicht gelöst werden. Als Beispiel möchten wir einige erwähnen, die mit dem Begriff "Behandlung" gedeckt sind. Es besteht die Möglichkeit, flüssigen Stickstoff zirkulieren zu lassen, wodurch die Erde und die in den Poren enthaltene Flüssigkeit in einer Tiefe von mehreren Metern gefriert. Weiterhin ist auch eine thermische Behandlung möglich, wodurch Kohlenwasserstoffe flüchtig werden. Durch die Anwendung kann der Stand des Grundwassers erhöht bzw. verringert werden; die Möglichkeit der Bodenbelüftung ist gegeben; der Boden kann mit irgendwelchem Gas in Kontakt gebracht werden. Falls Schwermetalle in der Verunreinigung vorhanden sind, können diese unschädlich gemacht werden. In diesem Fall werden einfassende Materialien, die zur Wasserunlöslichkeit der Schwermetalle führen, in den Unterboden injektiert.

Neben geschilderten akzessorischen Erfolgen besteht der überwiegende Vorteil darin, daß das Verfahren überall Verwendung findet, wo traditionelle Technologien nicht anwendbar sind, so z. B. unter Betrieben, Fabriken, Seen und Flüssen sowie verdichtet angeordneten Bauobjekten, wo Bodenverunreinigung wegzuschaffen ist.

Es soll noch bemerkt werden, daß das erfindungsgemäße Verfahren mit traditionellen Technologien (so z. B. vertikalen Bohrungen) kombiniert werden kann, wodurch die Vielseitigkeit der Erfindung erhöht wird.

## Patentansprüche

1. Verfahren zur lokalen Behandlung von Böden, insbesondere zur Prüfung und Reinigung von verunreinigten Böden, unter Verwendung eines Rohre aufweisenden, die Oberfläche mit einer zu behandelnden Bodenschicht (1) verbindenden Fördersystems zum Zuführen von Behandlungsmittel, insbesondere Reinigunusmittel, zur Bodenschicht und zum Zurückführen von Behandlungsmittel und/oder zu entfernende Verunreinigungen mit sich führender Flüssigkeiten von der Bodenschicht zur Oberfläche,
**dadurch gekennzeichnet**,
daß das Fördersystem wenigstens einen Strömungskreis aufweist mit einem an die Lage der zu behandelnden Bodenschicht (1) angepaßten und durch diese geführten, insbesondere horizontalen, perforierten unterirdischen Rohrsystem (6) und mit vom Rohrsystem (6) zur Oberfläche hin schräg verlaufenden Zuführ- und Zurückführ-Anschlußrohren (4, 5), die über das Rohrsystem (6) miteinander verbunden sind.

2. Verfahren nach Anspruch 1, dadurch gekennzeichnet, daß die zur Oberfläche geförderte verunreinigte Flüssigkeit diskontinuierlich oder kontinuierlich analysiert wird.

3. Verfahren nach Anspruch 1 oder 2, dadurch gekennzeichnet, daß die zu behandelnde Bodenschicht (1) unabhängig vom Rohrsystem (6) mit Hilfe eines Beobachtungsbrunnens (10) geprüft wird.

4. Verfahren nach einem der Ansprüche 1 bis 3, dadurch gekennzeichnet, daß die zu behandelnde Bodenschicht (1) mit Hilfe eines in wenigstens einem Teil des Rohrsystems (6) eingebauten, an eine Meßeinheit an der Oberfläche angeschlossenen Bohrloch-Untersuchungskabels mit Meßelement geprüft wird.

5. Verfahren nach einem der Ansprüche 1 bis 4, dadurch gekennzeichnet, daß die zur Oberfläche geförderte Flüssigkeit gereinigt und das Reinwasser in die verunreinigte Bodenschicht (1) rückgeleitet wird.

6. Verfahren nach einem der Ansprüche 1 bis 5, dadurch gekennzeichnet, daß als Reinigungsmittel Bakterienkultur und/oder Chemikalien verwendet werden.

## Claims

1. Process for the local treatment of soils, in particular examining and cleaning of contaminated soil, using a delivery (pumping) system comprising pipes connecting the surface with the contaminated layer (1) intended to be treated for pumping a treating medium, particularly cleaning medium to the contaminated layer and recycling the treating medium and/or the liquid, containing the contamination to the surface,
**characterised in**, that
the delivery (pumping) system contains at least one flow circuit comprising an underground pipe-system (6) with perforated, in particular horizontal pipes, said underground pipe system being guided through and adapted to the contaminated layer (1) intended to be treated, and further said flow circuit comprising connecting pipes (4,5) for pumping and recycling liquid to the layer and back to the surface, with said connecting pipes being guided in an oblique angle from said pipe system (6) to the surface and being connected to each other through said pipe system (6).

2. Process as claimed in Claim 1,
**wherein**
the contaminated liquid being delivered (pumped) to the surface will be analysed continuously or discontinuously.

3. Process as claimed in Claim 1 or Claim 2
**wherein**
the layer (1) intended to be treated is monitored independently of the pipe-system (6) by means of observing well (10).

4. Process as any of the Claims 1 to 3
**wherein**
the layer (1) intended to be treated will be examined by means of carotage cable, being installed at least into a part of the pipe-system (6) and being connected to surfacial measuring unit.

5. Process as any of the Claims 1 to 4
**wherein**
the liquid delivered (pumped) to the surface will be cleaned, thereafter the clearwater will be recycled to the contaminated layer (1).

6. Process as any of the Claims 1 to 5
wherein
the treating medium comprises bacterial culture or chemical agents.

## Revendications

1. Procédé de traitement local de sols, en particulier pour contrôler et épurer des sols pollués, en utilisant un système de circulation comportant des tuyaux, reliant la surface avec une couche du sol (1) à traiter, pour acheminer des produits de traitement, en particulier des produits nettoyants, en direction de la couche du sol, et pour ramener des produits de traitement et/ou des liquides transportant des impuretés à éliminer, de la couche du sol vers la surface, caractérisé en ce que le système de circulation présente au moins un circuit d'écoulement, comportant un système de tuyaux (6) souterrain perforé, en particulier horizontal, adapté à la position de la couche du terrain (1) à traiter et traversant celle-ci, et comportant des tuyaux de raccordement (4, 5) d'amenée et de retour, s'étendant en oblique entre le système de tuyaux (6) et la surface, qui sont reliés entre eux par l'intermédiaire du système de tuyaux (6).

2. Procédé selon la revendication 1, caractérisé en ce que le liquide pollué ramené à la surface est analysé de façon discontinue ou continue.

3. Procédé selon la revendication 1 ou 2, caractérisé en ce que la couche du sol (1) à traiter, indépendamment du système de tuyaux (6), est contrôlée à l'aide d'un puits d'observation (10).

4. Procédé selon l'une des revendications 1 à 3, caractérisé en ce que la couche du sol (1) à traiter est contrôlée à l'aide d'un câble d'exploration à élément de mesure, introduit par un perçage, et raccordé à une unité de mesure à la surface, inclus dans au moins une partie du système de tuyaux (6).

5. Procédé selon l'une des revendications 1 à 4, caractérisé en ce que le liquide remonté à la surface est épuré et l'eau purifiée est renvoyé dans la couche du sol (1) polluée.

6. Procédé selon l'une des revendications 1 à 5, caractérisé en ce qu'une culture bactérienne et/ou des produits chimiques sont utilisés comme produit nettoyant.
